# EUROPEAN PATENT APPLICATION

(11) **EP 1 223 567 A1**
(43) Date of publication of application: **17.07.2002**
(21) Application number: 01100645.9
(22) Date of filing: 11.01.2001
(51) Int. Cl.: G08G 1/0965, G08G 1/16, B60Q 1/52

(54) **A method for inter-vehicle communication of individualized vehicle data**

(71) Applicant: Siemens Aktiengesellschaft, 80333 München (DE)
(72) Inventor: Völkel, Andreas, 35619 Braunfels (DE)

(57) **Abstract**

A driver of a motor vehicle is provided with actualized information, through communicating with one or more other motor vehicles that are located nearby, vehicle data concerning their respective positions and motions, and on the basis of these vehicle data, and on the basis of received external data regarding conditions that are external to the vehicles, displaying relevant such information by way of advice. In particular, such vehicle data are individualized for the associated vehicle and include measured distances between vehicles, and in that information so displayed is based on a policy combining both such vehicle information and external information.

## Description

The invention relates to a method for inter-vehicle communication of individualized vehicle data including measured inter-vehicle distances and respective motions and also data regarding conditions that are external to the vehicles for displaying relevant information based on a policy combining both vehicle information and external information. In particular such method provides a driver of a motor vehicle with actualized traffic information, through communicating with one or more other motor vehicles that are located nearby, vehicle data concerning their respective positions and motions, and on the basis of these vehicle data, and on the basis of received further data regarding conditions that are external to the above vehicles, displaying such information, if relevant, by way of advice.

Anti-collision systems for motor vehicles have been proposed that take into account a measured distance to the predecessor vehicle in a traffic lane. It has also been proposed to include in such system the occurrence of a motor vehicle in an opposing traffic direction and therefore, another lane, to advise the driver against the starting of an overtaking operation. It has also been proposed to display warnings to a driver as being based on steady road conditions that are still out of sight to the driver, such as behind the next curve. The present inventor has recognized however that such warning schemes should better be based on a comprehensive set of various categories of available information. Such information may then include not only the immediate predecessor vehicle, but also the second, third, and possibly further vehicles ahead. Also, the ***combination*** of vehicles present ***and*** possible adverse road conditions such as traffic lights, pedestrian crossings, lanes joining, and many others could to advantage be taken into account for structuring the advice.

In consequence, amongst other things, it is an object of the present invention to accumulate various such different data categories for allowing extracting therefrom the most acute information for presentation to the driver.

Now therefore, according to one of its aspects the invention is characterized in that such vehicle data are individualized for the associated vehicles and include measured distances between vehicles, and in that information so displayed is based on a policy combining both such vehicle information and such external information.

Preferably, said vehicle information comprises one or more of the following: position, speed, heading, outline, lane information, color, brand, model, license number.

In another preferred method according to the invention such communicating includes forwarding of vehicle data along with and/or counter to an actual direction of traffic flow, eventually being restricted to a limited-size environment.

Preferably, such displayed information includes actual signaling from one or more traffic lights.

Information displayed may come on various different levels of advisory urgency.

Another preferred method according to the invention features multi-lane display and/or geometrical display of various actually present other vehicles.

The invention also relates to a system arranged for practicing the method according to the invention.

Such system comprises means for providing a driver of a motor vehicle with actualized traffic information, through driving communicating means for communicating with one or more other motor vehicles that are located nearby, vehicle data concerning their respective positions and motions, and processing and display means for on the basis of these vehicle data, and on the basis of received further data regarding conditions that are external to the above vehicles, displaying such information by way of advice, and is characterized according to the invention in that such processing means are arranged for processing vehicle data that are individualized for the associated vehicles and include measured distances between vehicles, and in that said display means are arranged for displaying information as based on a policy combining both such vehicle information and such external information.

Preferably, such system comprises a portable station comprising operator input means, processing means, and communicating means for extending said communicating and processing with operator supported data and/or presenting such operator with system-internal data.

In a further preferred embodiment of the invention, the system is arranged for inter-vehicle speech communication through said communication means.

The invention furthermore relates to a motor vehicle arranged for operating as a station for practicing the present invention.

Such a motor vehicle comprises means for providing a driver of the vehicle with actualized traffic information, through driving communicating means for communicating with one or more other motor vehicles that are located nearby, vehicle data concerning their respective positions and motions, and processing and display means for on the basis of these vehicle data, and on the basis of received further data regarding conditions that are external to the above vehicles, displaying such information by way of advice, and is characterized according to the invention in that such processing means are arranged for processing vehicle data that are individualized for the associated vehicles and include measured distances between vehicles, and in that said display means will display information as based on a policy combining both such vehicle information and such external information.

In a preferred embodiment of motor vehicle according to the invention said display means are arranged for zooming in and out regarding displayed shapes of other motor vehicles.

Preferably, said processing means are arranged for storing relatively long-term data regarding a plurality of other motor vehicles, whilst retaining supplementary storage space for accommodating relatively short-term data regarding a further plurality of other motor vehicles.

In a further preferred embodiment of such motor vehicle said display means are arranged for selectively indicating anticipated spatial conditions of an impending distress situation.

These and further aspects and advantages of the invention will be discussed more in detail hereinafter with reference to the disclosure of preferred embodiments, and in particular with reference to the appended Figures that show:
- Figure 1,: a multi-vehicle environment associated to practicing the invention;
- Figures 2a, 2b,: a first multi-vehicle situation and an associated display;
- Figures 3a, 3b,: a second multi-vehicle situation and an associated display;
- Figure 4,: a third multi-vehicle situation;
- Figure 5,: a fourth multi-vehicle situation;
- Figure 6,: a first vehicle system arrangement;
- Figure 7: a second vehicle system arrangement;
- Figure 8,: a first flow chart for organizing a method for practicing the invention;
- Figure 9,: a second flow chart for organizing a method for practicing the invention.

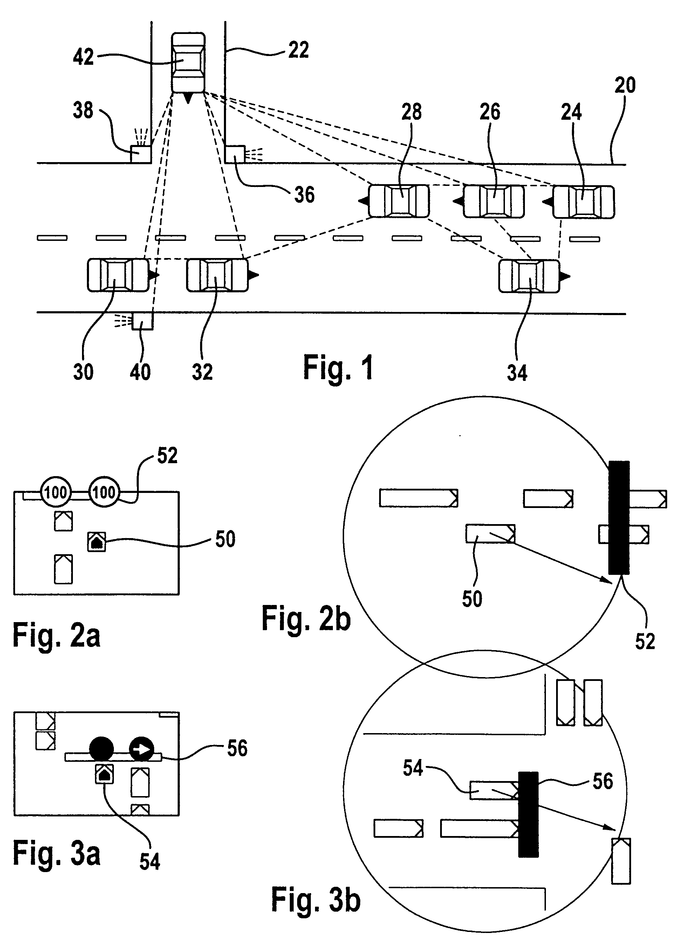

Figure 1 illustrates a multi-vehicle environment associated to practicing the invention. As shown, a major two-lane road 20 intersects a minor one-lane road 22. Motor vehicles 24, 26, 28, 30, 32, 34 and 42 drive generally right according to continental European fashion, and as indicated by associated small arrows on each vehicle. Traffic lights 36, 38, 40 will allow or prohibit driving in various well-known manners. As indicated by dotted lines, vehicles will communicate with each other relevant data, such as a relative position or distance, speed, heading, outline, lane information, color, license number, or such other information as considered useful, or a selection therefrom. Also, external information may be signaled as well, such as air temperature or humidity, ground temperature, etcetera. Furthermore, as also indicated by dotted lines, communication is executed between the vehicles and various external sources, in this case traffic light subsystems 36, 38, 40.

Now, depending on the exact situation, the present invention will provide the drivers with various types of information displayed on their respective in-vehicle displays. For example, if a "green wave" has been established on the main road, the display may propose a particular speed, such as 65-75 km/hr for optimum throughput. Depending on the relative distances and speeds of vehicle sequences 24, 26, 28 and 30, 32, the display may advise against, or rather propose, selective overtaking, that may be based both on the actual situation, and also on a driving history of the particular driver. Alternatively, in case the vehicle 42 coming from the intersecting road 22 happens to be a police vehicle or an ambulance with its warning lights and horn on, the other vehicles may get specific advice, depending on the direction the emergency vehicle will take and on their own positions. In this case, such may bring about a stop signal for vehicles 24, 26 and 28, and a go signal for vehicles 30, 32 and 34, if vehicle 42 will turn to the left side of the Figure (to the right as seen by its driver). If vehicle 42 will turn the other way, the roles of the other vehicle groups may be interchanged. The signaling may or may not be combined with controlling of the traffic lights by vehicle 42, but the specific display of appropriate information inside the respective other vehicles will nevertheless produce a improved amount of flexibility.

Figures 2a, 2b, illustrate a first further multi-vehicle system situation and an associated display. In Figure 2b, various vehicles including target vehicle 50, will be driving below indicator portal 52 that carries speed regulatory indications. Figure 2a illustrates an associated in-vehicle display that shows a few nearby vehicles in the next lane to the left, and furthermore, the speed regulatory indications from the portal in a standardized format. As shown furthermore, various vehicles may be displayed according to a restricted set of non-uniform but standardized versions, for example featuring passenger cars, vans, and lorries or buses, each with an appropriate size or outline, according to the signals received from these vehicles. Next to a specific length, the display may also feature other aspects, such as color and an uncommon width or height. Regarding the display, the information may come on various levels of urgency. A low urgency is related to advisory messages, such as proposed speed or signaling moderate to heavy traffic ahead. A high urgency is related to messages such as prescribed speed, or an impending possible crash. Three or more levels may apply as well, and may be represented by various types of warning signals, icons, blinking, etcetera. Supporting by audio may effectively represent such different levels too.

Figures 3a, 3b, illustrate a second multi-vehicle system situation and an associated display. In Figure 3b various vehicles, including target vehicle 54, are driving up to a traffic light portal 56 that carries lane-dependent traffic lights. Figure 3a illustrates an associated in-vehicle display that shows a few nearby vehicles both in the next lane to the right, and also on the intersecting road, and furthermore, the traffic lights from the portal in a standardized format. It should be clear from the Figure that turning to the right is only allowed in the rightmost lane, whereas the direction straight ahead is prohibited in the latter lane. It should be clear that the position of the display field within the vehicle can be chosen in or near the standard field-of-vision of the driver, such as on a specific display device, or be projected in line with the windshield or on a rear-view mirror. On the other hand, the traffic lights themselves, just like the speed signalizations in Figure 2b, must be placed so high that traffic is left unencumbered, which may present a less than optimum viewing angle to the driver.

The technical solution of the present invention is such that within a local radius of some 200 meters (or another suitable range) apart, the vehicles will exchange data with other mobile or fixed stations such as other vehicles, traffic lights, traffic signs, or even unsigned situations, such as a crashed vehicle or another accidental feature that has a transmitter placed on or near it. Furthermore, a further station in question may be a portable "policeman assistant" that may in various manners be able to interact with the vehicles, as well as with the other stations. For example, the policeman in question may order actual traffic control to change-over to control "by hand", whilst shutting down traffic light signalization, may interrogate various vehicles as regarding their license numbers, or warn vehicles to maintain lower speeds in case the traffic situation would dictate so. The data regarding a particular traffic entity may be fixed, such as signaling the frequent occurrence of crosswinds or the identity of a particular vehicle; it may be dynamically determined internally, such as by the speed of the vehicle in question, by the signaling by the traffic light in question, or by actual external (ambient) temperature; or it may be measured with respect to two or more entities, such as the distance or approaching velocity between two vehicles.

General data may be communicated within only a single range of some 200 meters as suggested above, and in such case the data transmitted could include speech communication as well. On the other hand, certain critical data may be transmitted over a few of those ranges of 200 meters, through spatially concatenating the various communicating operations.

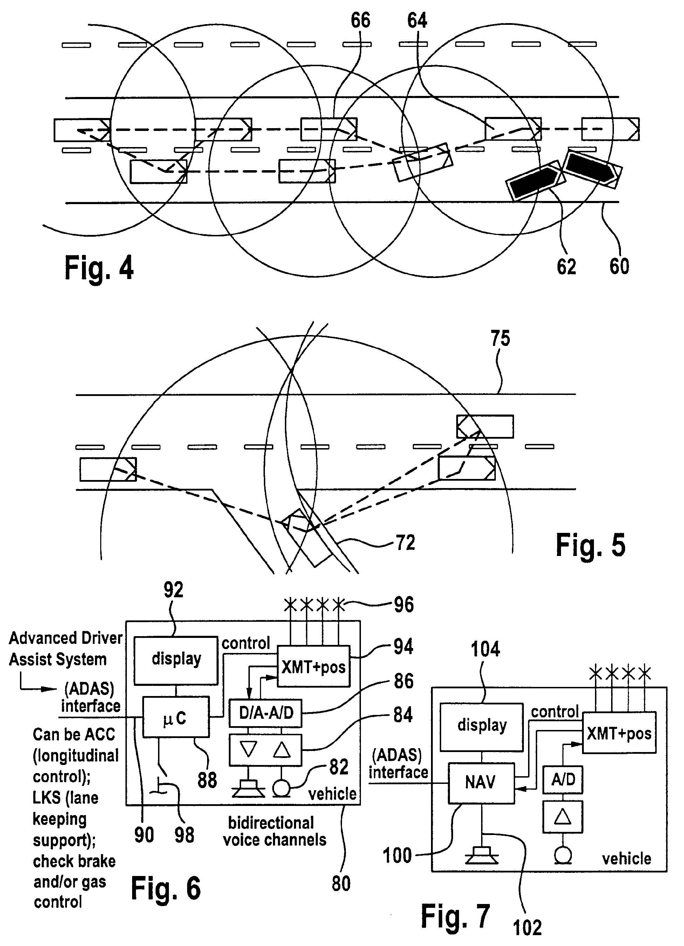

Figure 4 illustrates a third traffic situation. Here, road 60 has two lanes in either direction with some eleven vehicles actually shown. The various circles indicate the transmission range of the inter-vehicle communication. Now, the vehicles present include two vehicles 62 that have collided, thereby obstructing the right-hand lane leading to the right. For having the other vehicles 64 avoid to collide as well, their respective displays may now signal appropriate speeds to keep, and furthermore, a sequence wherein they could pass the collided pair by using the remaining lane. In fact, a prudent policy therein will allow these other vehicles to alternate from the two lanes and so to pass in a relatively orderly sequence, thereby maintaining the road throughput at or near its optimum value, whilst also maintaining a safe procedure.

Figure 5 illustrates a fourth traffic situation and its associated display. Two-lane road 70 and minor road 72 intersect in such a manner that vehicles on the latter remain invisible nearly until they will really emerge on the main road. In this case, the inter-vehicle transmission range from the vehicle on road 72 is being shown again by a circle. This communication will allow the various other vehicles to optimally react, such as by lowering speed, or by yielding. If one or more particular vehicles have automatic speed control and/or other guidance mechanisms currently active, these mechanisms could be either influenced immediately, or the guidance could be abandoned for some time, as being combined with presenting a warning indication in this respect to the driver of the vehicle in question.

Figure 6 illustrates a first vehicle system arrangement. Here the system has a relatively uncomplicated microcontroller 88 for effecting control. This has an **A**dvanced **D**river **A**ssist **S**ystem **ADAS**. Such facility may include ACC that effects longitudinal control or lane-keeping support, and also checks braking conditions and gas control. The Controller will produce audible collision warnings, control a speech channel with other units within reach, prepare to display vehicle outlines, or the status of various traffic sign units, such including visual collision warnings, speed prescriptions, and the like. Display subsystem is block 92. Switch 98 symbolizes user control if required, such as when the system is switched off.

The speech channel has been indicated by loudspeaker cum microphone 82, bi-directional amplification 84, and DA/AD conversion 86. The XMT/POS subsystem 94 has a variety of functions in the ambit of the present invention. It carries a unique identification for the vehicle in question, as well as for each fixed unit, such as a traffic light subsystem. It effects bi-directional communication with other vehicles, traffic lights/sign information, speed warning indication subsystems, etcetera within range, through antenna sub-system 96. As regarding a transmitter vehicle, it may transmit position, speed, heading, outline, color, brand, model and license number. In particular the color, brand and model of a vehicle will more easily and at greater distance be recognized than its license number. As regarding fixed units, applicable lane information and a reading of the indication will be transmitted. The subsystem in question will calculate relative position of other units, such as by Doppler, triangulation, or difference of absolute positions if known. It will continually transmit all relevant information concerning other stations within the environment to the local microcontroller. If not connected to the microcontroller, it will generate a standalone emergency signal. Furthermore, it will transmit local information to other units within range.

Figure 7 illustrates a second vehicle system arrangement. Here, the vehicle instead of a straightforward microcontroller, has a full navigational unit 100 that provides for map display and for speech output 102. In this case, the system of the present invention will be integrated with the navigation. Inter alias, this will allow to display the outline of nearby vehicles in line with their effective size, such as would be relevant when zooming in or out on the map. Generally, the present invention should allow to store data of more stations/vehicles than it would actually communicate with, in order to cater for any new station and/or changed transmission condition that may occur. As a particular dimensioning, the vehicle could connect with ten vehicles at a time, but still allow to store the data sets of ten more vehicles, so that a temporary interrupt of the connection will upon resuming only require to communicate a limited subset of the data, such as only ID and position of the relevant vehicle. A collision warning may include the direction where the distress in question is expected to come from, such as front, rear, left, right, or even more refined indications, such as front left.

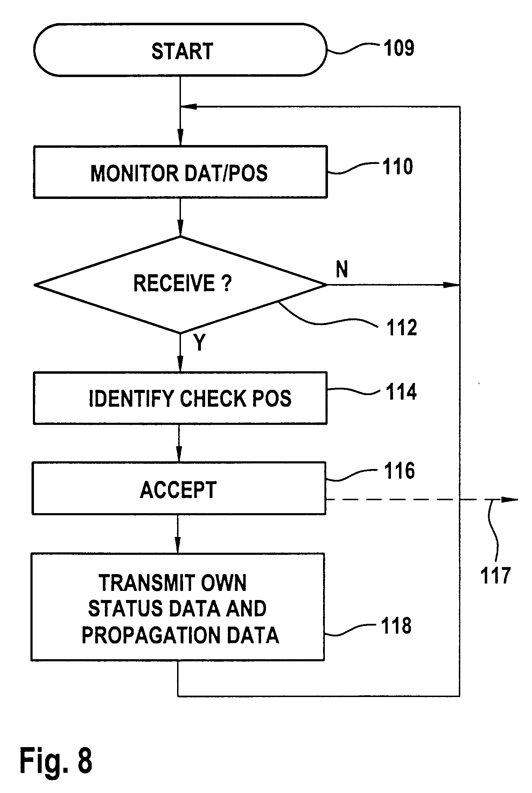

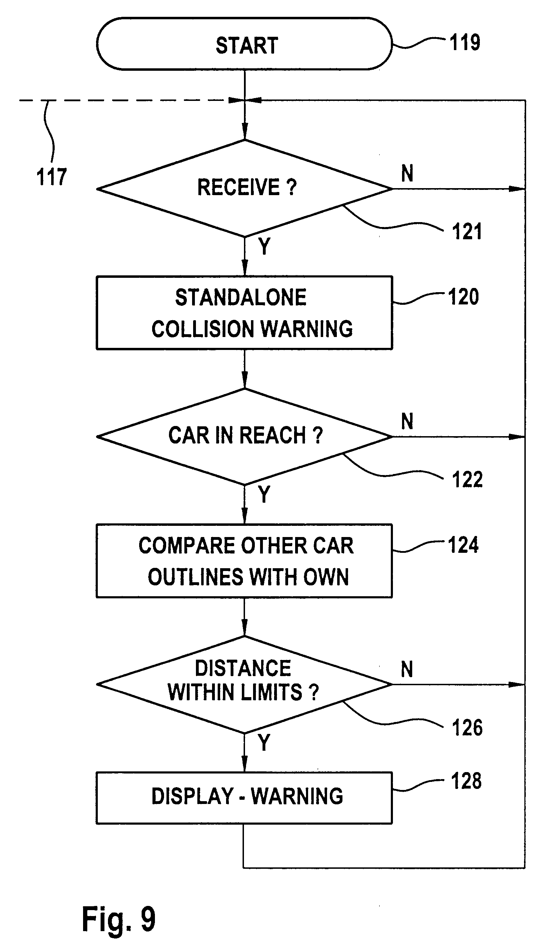

Figure 8 illustrates a first flow chart for organizing a method for practicing the invention, and in particular, regarding subsystem 94 in Figure 6. In block 109, the operation starts, such as through powering on of the vehicle. If applicable, this will assign the necessary hardware and software facilities. Next, in block 110, the steady state of the system prevails, wherein the vehicle will monitor its own internal data, and also continually calculate its position, for example, on the basis of GPS. Block 110 is followed by block 111, in which the vehicle will repeatedly broadcast such data as considered relevant by way of a life sign signal, which allows other similar vehicles or stations to detect any transmission and therewith the position of the transmitting vehicle. Periodically, the system will go to block 112, and check for a reception of externally generated data. If no (N), the system reverts to block 110, so that effectively, blocks 110-112 constitute a waiting loop. If reception has occurred however (Y), the system goes to block 114, wherein the source identity and its location are checked, such as through distance measuring. Next, in block 116, the data is accepted. If relevant, arrow 117 signals that a message is sent to the process in Figure 9. In block 118, the vehicle's own data are again broadcast to other stations if any, together with data received in block 112. If the original source of the data is too far away, or if its position is irrelevant, then the data in question, and also the associated station, are ignored and its data not transmitted further. For example, the vehicle-to-vehicle distances along the lane in question are summed, taking into account some biasing for the vehicles outline such as length, width and eventual other vehicle size parameters. This sum is being compared with a certain threshold value. A distance of more than, say 1000 meters, will render most messages irrelevant. A fraction of such messages could, however, be transmitted from vehicle to vehicle over a larger distance.

Another ignoring scheme could apply to messages that were irrelevant for other reasons, such as those messages that pertain to the "other" direction on a motor expressway, or most messages that pertain to rearward positions relative to the vehicle considered for the displaying. Subsequent to block 118, the system reverts again to block 110.

Figure 9 illustrates a second flow chart regarding a method to practice the invention, and in particular, regarding the decision if, and what to actually display. As in Figure 8, start block 119 prepares for operation, after which block 121 monitors for messages received from the organization of Figure 8, line 117. As long as none is received, block 121 represents a waiting loop. In block 120, the system finds that the vehicle in question has received a standalone collision-warning signal. In block 122, the local system checks whether any other vehicle is in reach. If no (N), the warning proves to be irrelevant and the system reverts to block 120. If yes (Y) in block 122, in block 124 the vehicle system compares the outlines of other vehicles with the outline of its own vehicle, to check whether a collision is actually impending. In block 126 the system checks whether the combined outlines signal that the distance and/or other size parameters are such that collision is imminent (Y). Such may be the case when a large van has actually obstructed the lane next to the one that is being used by the vehicle in question. In contradistinction, a small passenger car on the next lane would present no problem. If no (N), the system reverts to block 124. If yes (Y), the system in block 128 triggers an audible and/or visual warning, and subsequently, reverts to block 120 again for continuous updating of the situation. Similar procedures may apply when the information is not related to the actual traffic, such as the indications shown in Figures 2a, 3a.

The flow charts of Figures 8, 9, have been simplified for not obscuring the essence of the present invention unnecessarily. For example, the system may terminate its operation when the vehicle is powered off. Furthermore, the displaying may, as discussed with reference to the other Figures, show various other aspects, such as traffic signs, traffic regulations or restrictions, actual positions of more or less relevant other vehicles, and/or aspects of the road or traffic in general. Furthermore, blocks 121 and 120 may be left out from the flow chart of Figure 9.

These and other amendments and modifications to the embodiment will be recognized by persons skilled in the art as not being outside the scope of the present invention. Various further aspects of the invention would at any rate include the following.

The number plate/Visible ID information for the vehicles are included in the data stream plus also hidden ID information for all stations, i.e. also for non-vehicle stations. In particular, fixed units have and transmit local lane geometry information, such as for traffic lights, the number and direction of the lane they relate to. As regarding the communicating of the data between the vehicle and other stations, a simple scheme is brute force transmission: pass on to every station. Furthermore, inasmuch as the data communicated will indicate its originator, only the originator will suppress its own geometry information. On the other hand, optimized propagation uses position information, and will, for example, only transmit forwardly to vehicles that move in the opposite direction.

While the above described embodiments of the invention are the preferred ones, it is apparent to those skilled in the art that many other changes and modifications may be made, without departing from the invention in its broader aspects. Therefore the intentions of the claims is to cover such changes and modifications, falling within the true spirit and scope of the invention.

## Claims

1. A method for providing a driver of a motor vehicle (50, 54, 64) with actualized traffic information, through communicating with one or more other motor vehicles (24-34, 42, 60, 62) that are located nearby, vehicle data concerning their respective positions and motions, and on the basis of these vehicle data, and on the basis of received further data regarding conditions (36-40, 52, 56) that are external to the above vehicles, displaying such information by way of advice, **characterized in that** such vehicle data are individualized for the associated vehicles and include measured distances between vehicles, and **in that** information so displayed is based on a policy combining both such vehicle information and such external information.

2. A method as claimed in Claim 1, **characterized in that** said vehicle information comprises one or more of the following: position, speed, heading, outline, lane information, color, brand, model, license number.

3. A method as claimed in Claim 1, **characterized in that** such communicating includes forwarding of vehicle data along with and/or counter to an actual direction of traffic flow.

4. A method as claimed in Claim 1, **characterized in that** the information so displayed (52, 56) comes on various different levels of advisory urgency.

5. A method as claimed in Claim 1, **characterized in that** information so displayed includes actual signaling from one or more traffic lights (56).

6. A method as claimed in Claim 1, **characterized by** featuring multi-lane display.

7. A method as claimed in Claim 1, **characterized by** featuring geometrical display of various actually present other vehicles.

8. A method as claimed in Claim 3, **characterized in that** such communicating restricts to a limited-size environment.

9. A system arranged for implementing a method as claimed in Claim 1 and having means for providing a driver of a motor vehicle (50, 54, 64) with actualized traffic information, through driving communicating means (94, 96) for communicating with one or more other motor vehicles (24-34, 42, 60, 62) that are located nearby, vehicle data concerning their respective positions and motions, and processing (88, 94, 100) and display (92, 104) means for on the basis of these vehicle data, and on the basis of received further data regarding conditions (36-40, 52, 56) that are external to the above vehicles, displaying such information by way of advice, **characterized in that** such processing means (88, 94, 100) are arranged for processing vehicle data that are individualized for the associated vehicles and include measured distances between vehicles, and **in that** said display means (92, 104) are arranged for displaying information as based on a policy combining both such vehicle information and such external information.

10. A system as claimed in Claim 9, **characterized in that** vehicle information comprises one or more of the following: position, speed, heading, outline, lane information, color, brand, model, license number.

11. A system as claimed in Claim 9, **characterized in that** such communicating means (94, 96) are arranged for forwarding vehicle data along with and/or counter to an actual direction of traffic flow.

12. A system as claimed in Claim 9, **characterized in that** such communicating means (94, 96) are arranged for restricting communication to a limited-size environment.

13. A system as claimed in Claim 9, **characterized by** comprising a portable station comprising operator input means, processing means, and communicating means for extending said communicating and processing with operator supported data and/or presenting such operator with system-internal data.

14. A system as claimed in Claim 9, **characterized by** inter-vehicle speech communication through said communication means (94, 96).

15. A motor vehicle arranged to operate as a station for implementing a method as claimed in Claim 1 and having means for providing a driver of the vehicle (50, 54, 64) with actualized traffic information, through driving communicating means for communicating with one or more other motor vehicles (24-34, 42, 60, 62) that are located nearby, vehicle data concerning their respective positions and motions, and processing (88, 100) and display (92, 104) means for on the basis of these vehicle data, and on the basis of received further data regarding conditions (36-40, 52, 56) that are external to the above vehicles, displaying such information by way of advice, **characterized in that** such processing means (88, 100) are arranged for processing vehicle data that are individualized for the associated vehicles and include measured distances between vehicles, and **in that** said display means (92, 104) will display information as based on a policy combining both such vehicle information and such external information.

16. A motor vehicle as claimed in Claim 15, **characterized in that** said display means are arranged for zooming in and out regarding displayed shapes of other motor vehicles.

17. A motor vehicle as claimed in Claim 15, **characterized in that** said processing means are arranged for storing relatively long-term data regarding a plurality of other motor vehicles, whilst retaining supplementary storage space for accommodating relatively short-term data regarding a further plurality of other motor vehicles.

18. A motor vehicle as claimed in Claim 15, **characterized in that** said display means are arranged for selectively indicating anticipated spatial conditions of an impending distress situation.
